# EUROPEAN PATENT SPECIFICATION

(11) **EP 3 870 816 B1**
(45) Date of publication and mention of the grant of the patent: **02.08.2023**
(21) Application number: 19797197.1
(22) Date of filing: 23.10.2019
(51) Int. Cl.: F01N 3/20, F04B 53/08, F04B 53/20

(54) **A PUMP ASSEMBLY FOR USE IN A SELECTIVE CATALYTIC REDUCTION (SCR) SYSTEM**
PUMPENANORDNUNG ZUR VERWENDUNG IN EINEM SYSTEM DER SELEKTIVEN KATALYTISCHEN REDUKTION (SCR)
ENSEMBLE POMPE DESTINÉ À ÊTRE UTILISÉ DANS UN SYSTÈME DE RÉDUCTION CATALYTIQUE SÉLECTIVE (SCR)

(30) Priority: 25.10.2018 GB 201817382
(43) Date of publication of application: 01.09.2021
(73) Proprietor: Delphi Technologies IP Limited, Saint Michael (BB)
(72) Inventor: ZHOU, Larry, Shanghai (CN); WANG, Fei, Yantai, ShanDong (CN); SHI, Bryce, Yantai, ShanDong (CN)
(74) Representative: Keltie LLP
(86) International application number: PCT/EP2019/078917
(87) International publication number: WO 2020/084004

(56) References cited:
- WO-A1-2018/072558
- CN-U- 203 098 003
- DE-A1-102011 075 422
- US-A1- 2017 292 425
- US-B2- 9 127 583

## Description

### TECHNICAL FIELD

The present disclosure relates to pump assembly for a selective catalytic reduction (SCR) dosing system. Aspects of the invention relate to a pump assembly and an SCR dosing system comprising a pump assembly.

### BACKGROUND

Selective catalytic reduction (SCR) is a means of converting nitrogen oxides (NOₓ) with the aid of a catalyst into diatomic nitrogen (N₂), and water (H₂O). In SCR dosing systems, a "dose" of gaseous reductant, such as urea, is injected into a stream of flue or exhaust gas produced by a compression ignition internal combustion engine. SCR dosing systems are typically implemented in diesel-fuel combustion engines where a SCR pump assembly pumps a pressurised filtered dose of urea into a stream of exhaust gas. As urea has a relatively high freezing temperature (i.e. -11°C), there is a risk of it freezing within the SCR pump assembly at low temperatures, particularly when inside the filter and pump assembly components. This can prevent the SCR pump assembly from functioning due to ice blockage. Moreover, damage to the SCR pump assembly may occur due to ice expansion.

In order to reduce the risk of the urea freezing, related prior art (US 2017 0292425 A1) discloses a solution of using a thermal insulating blanket. The blanket covers at least some portions of both pump and filter assemblies contained within a housing, and is disposed between a housing lid and the covered portions of the pump and filter assemblies. A retention plate is required and is disposed between the housing lid and the blanket. The retention plate has a moulded body portion, shaped to correspond to the shapes of the portions of the pump and filter assemblies, and has a flange that extends from the body portion to contact an interior surface of the housing lid. In use, the housing lid urges both the retention plate and the blanket towards the portions of the pump and filter assemblies. In this way, the blanket takes the shape of and covers those portions of the pump and filter assemblies to provide them with thermal insulation from low temperatures.

In the related prior art, the blanket is covered by the retention plate and is therefore not visible for routine inspection even when the housing lid is removed. This makes it difficult for someone (e.g. a mechanic) to determine whether or not the blanket is correctly aligned and is providing adequate thermal insulation of the pump and/or filter assemblies. Furthermore, the need for a retention plate in addition to the housing lid increases the overall weight and manufacturing costs of the pump assembly.

It is therefore desirable to provide an improved thermal insulating solution for an SCR pump assembly.

### SUMMARY OF THE INVENTION

According to an aspect of the invention there is provided a pump assembly for use in a selective catalytic reduction (SCR) system of a compression ignition internal combustion engine. The pump assembly comprises; a housing, a pump, located within the housing, for pressurising urea to be delivered by the selective catalytic reduction system, a filter, located within the housing, for filtering urea to be drawn by the pump prior to pressurisation, and a heating system including a rigid cover for both the pump and the filter. The rigid cover is provided with integrated fixing means to enable attachment of the rigid cover to the housing. The heating system further includes a heated blanket beneath the rigid cover which covers at least a portion of the pump and of the filter, the heated blanket being attached to the rigid cover by means of glue or a mechanical fixing means.

The rigid cover is advantageously shaped to fit over, and follow the contours of, the pump and filter. In this way, it provides a thermally insulating barrier with limited air gaps in-between the rigid cover and the pump and/or filter. The integrated fixing means ensures that the rigid cover cannot be displaced or moved during its use (e.g. as a result of vehicle motion, etc.). In contrast to a conventional retention plate that would fit over the entire housing, the rigid cover is shaped to fit over and only cover the portions of the pump and filter where trapped, or residual urea, is at a high risk of freezing. In this way, the rigid cover is smaller and lighter than a conventional housing lid, which reduces the overall weight and manufacturing costs of the pump assembly.

In one embodiment, the pump assembly has a longitudinal axis of the pump is arranged perpendicularly, or near perpendicularly, relative to a longitudinal axis of the filter.

In one embodiment, the rigid cover is configured to cover only a portion of the filter and only a portion of the pump.

The rigid cover may comprise a cover portion shaped to fit over an upper portion of the pump and an upper portion of the filter.

In one embodiment the integrated fixing means includes a plurality of attachment tabs, each of which cooperates with a corresponding attachment feature of the pump housing.

In one embodiment at least one of the corresponding attachment features takes the form of a connecting pin.

For example, the attachment tab may include a buckle portion which is a moulded extension of the cover portion.

The buckle portion may comprise an aperture for receiving a respective one of the connecting pins for connecting the rigid cover to the housing.

In one embodiment the connecting pin is tapered from a thinner tip at one end thereof to a thicker central trunk at the other end thereof.

The aperture may be defined by a flexible skirt of the attachment tab which abuts the thicker central trunk of the connecting pin and provides a friction resistance to insertion of the connecting pin through the aperture beyond a predetermined position.

The arrangement provides a convenient means of attaching the rigid cover to the housing as the flexible skirt allows a degree of play between the parts to enable them to be manoeuvred into the correct position relative to one another, during assembly.

For example, the flexible skirt of each aperture may be segmented into multiple skirt portions. The housing may, for example, comprise at least four side walls and a housing base; where the housing base includes a suction inlet for urea, a backflow outlet for urea, and a circulation fluid interface.

In one embodiment, the housing additionally comprises a top cover which encloses the housing so that the rigid housing, the pump and the filter are contained within an enclosed space defined within the housing.

According to another aspect of the invention, there is a selective catalytic reduction (SCR) system of a compression ignition internal combustion engine including a pump assembly of the previous aspect, and a dosing module for receiving pressurised urea from the pump assembly and dosing to the exhaust flow from the engine.

According to another aspect of the invention, there is a method of assembling a pump assembly for use in a selective catalytic reduction (SCR) system of a compression ignition internal combustion engine, the method comprising: locating a pump within a housing; the pump being configured to pressurise urea to be delivered by the selective catalytic reduction (SCR) system; locating a filter within a housing, the filter being configured to filter urea to be drawn by the pump prior to pressurisation; providing a heating system including a rigid cover, having an integrated fixing means, and a heated blanket beneath the rigid cover which covers the pump and the filter, the heated blanket being attached to the rigid cover by means of glue or a mechanical fixing means; and wherein the method further comprises the step of cooperating the integrated fixing means with a corresponding attachment feature provided on the housing to attach the rigid cover to the housing, and performing a visual inspection of the integrated fixing means throughout the attachment step so as to position the rigid cover correctly on the housing.

As the integrated attachment means remains visible throughout the attachment process, and once the rigid cover is attached to the housing, it is possible for the user to tell readily whether the cover is fitted correctly.

If all of the integrated fixing means remain visible to a user when the cover is in place the user knows whether the cover is fitted correctly. This is not the case in the prior art where a housing cover is required to be fitted over the housing, fully enclosing and shielding from view all components of the pump assembly and any thermally insulating means (e.g. a blanket). Furthermore, the advantage of this assembly method is that it provides a flexible fastening connection to account for manufacturing tolerances between the parts, and makes the process of attaching the rigid cover to the housing easier for a user.

In one embodiment, the method may include the further step of closing the housing with an additional cover so that the pump and filter are contained within an enclosed space, defined within the housing, together with the rigid cover.

Within the scope of this application it is expressly intended that the various aspects, embodiments, examples and alternatives set out in the preceding paragraphs, or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a first perspective view, from the topside, of a housing of a pump assembly of the invention, including a top cover;
Figure 2 is a second perspective view, from the bottom side, of the housing in Figure 1;
Figure 3 is a perspective view of the housing in Figures 1 and 2 with the top cover removed to expose the internal components of the assembly;
Figure 4 is a top view of the pump assembly in Figures 1 to 3 indicating the urea flow direction with respect to the pump, filter, and fluid outlet;
Figure 5 is a view of a top portion of the pump assembly with a rigid cover attached;
Figure 6 is a perspective view showing an attachment tab of the rigid cover in Figure 5; and
Figure 7 is an enlarged view of the attachment tab in Figure 6.

### DETAILED DESCRIPTION

A pump assembly for use in a selective catalytic reduction (SCR) system is described herein with reference to the accompanying Figures. The pump assembly of the SCR system is housed within a housing located near to the exhaust assembly of a compression ignition internal combustion engine (not shown in the figures) and is configured to deliver urea to a dosing module (not shown) for delivering urea to an exhaust flow of the exhaust system.

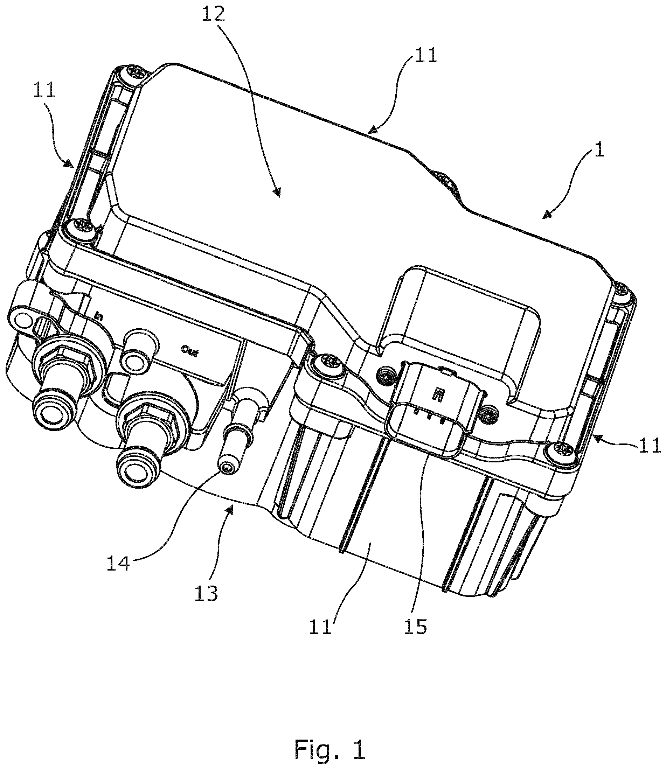

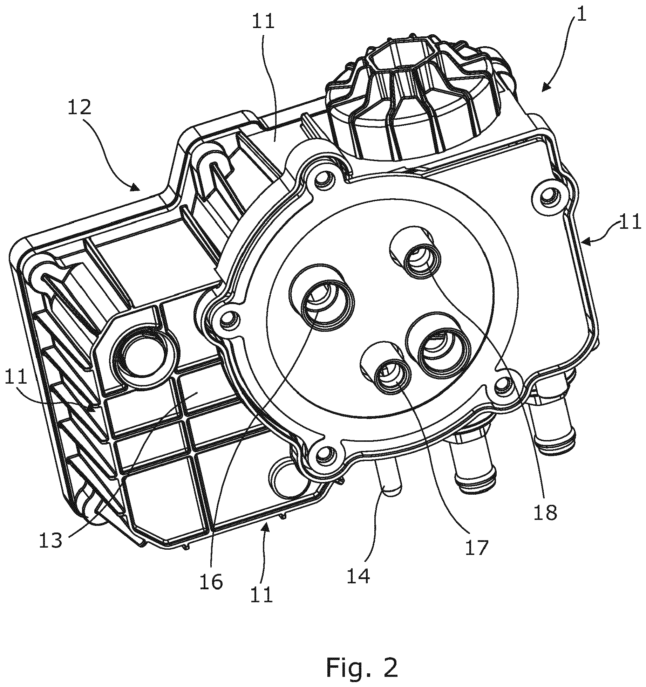

To place embodiments of the invention in a suitable context, reference will firstly be made to Figures 1 and 2 which show perspective views of a pump assembly housing (referred to as the housing) 1. The housing 1 includes a removable housing cover 12 (here shown attached to the housing 1 and referred to herein as the 'top' cover), four side walls 11, and a housing base 13 (not visible in Figure 1). The housing 1 includes a fluid outlet 14 located on one side wall 11. The fluid outlet 14 allows the pump assembly to connect with and deliver urea to an exhaust gas flow from the engine exhaust assembly (not shown in the figures). The housing 1 also includes an electrical interface 15 for connection with an auxiliary electrical power supply belonging to the vehicle (not shown in the figures) in which the pump assembly is installed. The auxiliary electrical power supply provides electrical power to the components of the pump assembly (as will be described later) through the electrical interface 15.

As can be seen in Figure 2, the housing base 13 includes at least two openings, where one opening is a suction inlet 17 for unfiltered urea and the other opening is a backflow outlet 18 for filtered urea. A supply of urea is stored in an external storage tank located outside of the housing 1 (not shown in figures). The suction inlet 17 is connected to the external urea storage tank to provide a means for supplying urea to the pump assembly. The backflow outlet 18 allows excess urea to flow out from the housing 1 and back into the urea storage tank. In the embodiment shown, the housing base 13 also includes a third opening which is a fluid interface connection 16 for allowing a circulation fluid (not shown in the figures) to flow into, and out from, the housing 1. In lower ambient temperatures, the circulation fluid is at a higher temperature than the components and so the flow of circulation fluid has a heating effect and can heat the components located within the housing 1, preventing the urea from freezing.

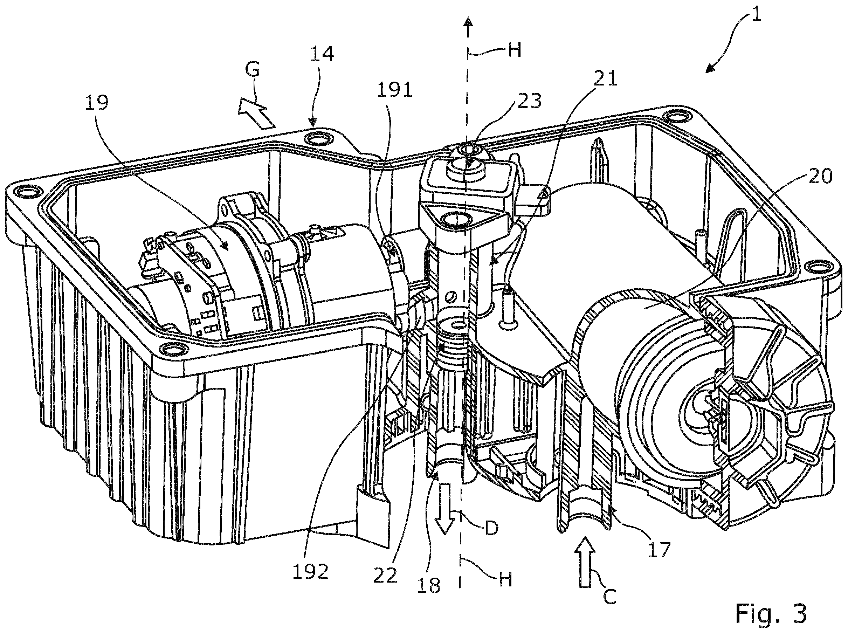

Referring also to Figure 3, a number of the components located within the housing 1 can be seen, namely; a pump 19, a filter 20, a pressure sensor 23, a pressure chamber 21, and a check valve 22. The pump assembly also includes a DCU (Dosing Control Unit) which is not visible in Figure 3. The pump 19 is for drawing urea from the urea storage tank into the housing 1 through the suction inlet 17 and for pressurising the urea to be delivered by pump assembly under the control of the DCU. The filter 20 is for filtering urea which is drawn by the pump 19 through the filter 20, prior to pressurisation. Urea is pressurised within the pump 19 and is delivered to a pressure chamber 21, internal to the housing 1, from where pressurised urea is delivered through the fluid outlet 14 of the housing 1 to the dosing module (not shown in figures). The outflow from the pump assembly is indicated by the arrow G. The flow into the filter is indicated by the upwards pointing arrow, C.

In use, the pump 19 performs a suction stroke and a discharge stroke. The pump 19 is a gear pump, where the suction and discharge strokes form a pump cycle and are driven by the volume change of urea during a gear engagement of the pump 19. The pump 19 includes an inlet 191 and an outlet 192 connected to a pressure chamber 21. Figure 3 illustrates the flow direction of urea during a suction stroke of the pump 19 and is indicated by the upwards pointing arrow, C. Urea is drawn through a 'suction fluid passage' during the suction stroke. During the suction stroke, the pump 19 draws urea from the external storage tank into the filter 20, through the suction inlet 17. In the same suction stroke the urea is drawn through the filter 20, where particulates and/or impurities are removed from the urea by the filter 20, and into the pump 19 through the inlet 191. The discharge stroke of the pump 19 then pressurises the filtered urea and delivers it from the outlet 192 to the pressure chamber 21. The pressure chamber 21 collects the pressurised urea and provides pressurised urea to the downstream dosing module. In a preferred embodiment, the dosing strategy is controlled by the DCU (not shown in the figures) which is integrated into the pump assembly.

The pressure sensor 23 measures the pressure, P, of the pressurised urea collected in the pressure chamber 21. The pressure sensor 23 is connected at an upper end of the pressure chamber 21, near to the removable top cover 12 (shown to be removed in Figure 3), allowing it to be easily accessed (e.g. for inspection by a service engineer). At an end distal to the removed top cover 12, the pressure chamber 21 is connected to the backflow outlet 18 in the housing base 13 by the check valve 22.

The pressure sensor 23 continually measures the pressure value, P, of the urea within the pressure chamber 21, and transmits this *P* value to the DCU in the form of sensor signals. The DCU receives the sensor signals through a wired connection (not shown in the figures). The DCU sends the control signals to the pump 19 to control the pump cycle. In one embodiment, the check valve 22 continuously provides a backflow of a certain volume of urea through the backflow outlet 18 in order to reduce the pressure fluctuations. The check valve 22 also provides a vacuum which can be used to purge urea from the pump assembly and from the dosing module. The system pressure is stabilised by a closed-loop control method implemented by the DCU, and uses the sensor signals measured by the pressure sensor 23 as feedback data for the closed-loop control. In this way, the pump 19 maintains system pressure at an acceptable level.

In an alternative embodiment, the check valve 22 is hydraulically operable such that, during pressurisation of the urea, the check valve 22 remains closed until such time as the pressure, *P*, of urea within the pressure chamber 21 exceeds a predetermined maximum pressure, *P_{threshold}.* The opening of the check valve 22 de-pressurises the pressure chamber 21 by allowing urea to flow out of the pressure chamber 21, through the check valve 22, and back into the urea storage tank. This is referred to as "backflow", where the flow direction of urea during de-pressurisation is indicated by the downwards pointing arrow, *D*, in Figure 3. Thus, the check valve 22 is configured to autonomously open when *P > P_{threshold}.* In another alternative embodiment, the check valve 22 is controlled to open and by the control unit when *P* exceeds *P_{threshold}.*

In one embodiment, the pressure sensor 23, the check valve 22, and the backflow outlet 18 are all located along a vertical axis, *H*, which is perpendicular to the outflow arrow *G*. The inlet 191 and the outlet 192 are parallel to each other, are both aligned perpendicularly to axis H, and are located below the pressure sensor 23.

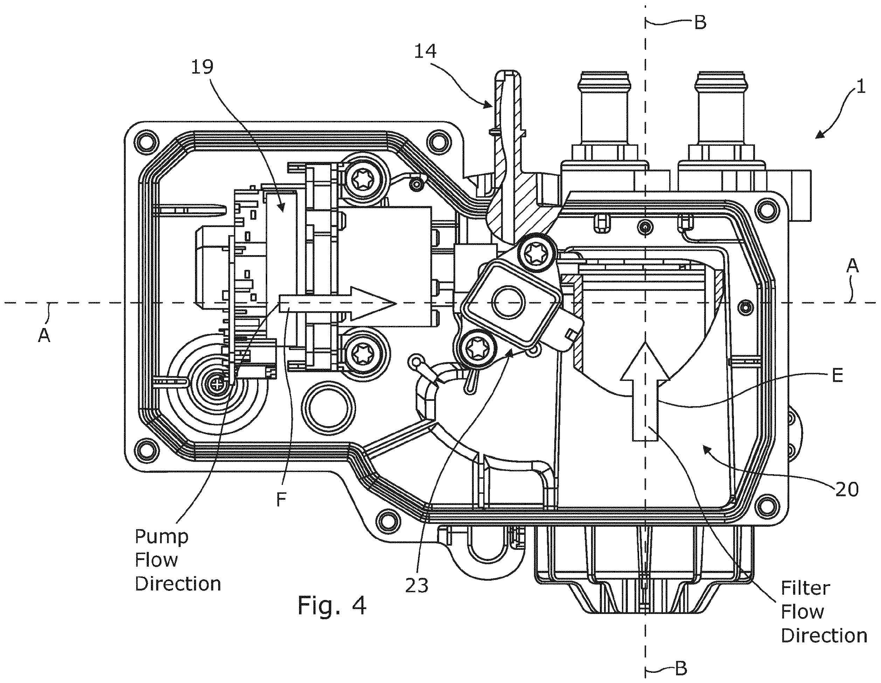

Referring to Figure 4, a 'pump flow direction' (horizontal arrow F) is indicated as the flow direction of urea during a discharge stroke of the pump 19. The pump flow direction extends along a longitudinal axis, *A*, of the pump 19. A 'filter flow direction' is indicated as the flow direction of urea during a suction stroke of the pump 19, and is indicated by a vertical arrow, *E.* The filter flow direction flows along a longitudinal axis, *8,* of the filter 20. The longitudinal axis of the pump 19, *A*, is orientated perpendicularly relative to the longitudinal axis, *8,* of the filter 20. The perpendicular arrangement of the longitudinal axes, *A* and *8,* relative to each other ensures that the pump flow and filter flow directions are also perpendicular to each other.

In an alternative embodiment of the pump assembly (not shown in the figures), the longitudinal axis, *A,* may be arranged at a near-perpendicular angle relative to the longitudinal axis, *8,* within the housing 1. For example, the longitudinal axes of the filter 20 and pump 19 may be arranged relative to each other at either an acute angle or at an obtuse angle, slightly higher or lower (e.g. +/- 10 degrees) than 90 degrees.

It is known in the art that residual urea can become trapped in the passages and/or pressure chamber 21 between the filter and the pump at the end of dosing. This typically happens when the vehicle and/or the SCR dosing system is shutdown, or at the end of a pump cycle when urea is present within the pressure chamber for any length of time. Residual urea freezes during low ambient temperatures (e.g. during freezing, or near freezing, weather conditions). Advantageously, the described arrangements, with the axes of the filter and the pump arranged perpendicular to one another, minimise the volume of these regions, which subsequently reduces the volume of urea that is at risk of freezing within the pump assembly. In this way, the perpendicular (or near-perpendicular) arrangement mitigates against urea blockages that can prevent the SCR dosing system from functioning properly.

Another benefit of the described arrangement is that it ensures that the overall occupational space of the housing 1 is minimised. For example, the arrangement allows for the fluid interface connection 16, the backflow outlet 18, and the suction inlet 17 to be centralised and located in close proximity in the same area on the housing base 13. This allows for a more compact housing 1, which is advantageously space saving, and is more convenient for disassembly and/or re-assembly, and for carrying out maintenance repairs on the pump assembly.

The removable top cover 12 for the housing provides a degree of thermal insulation for all of the pump assembly components.

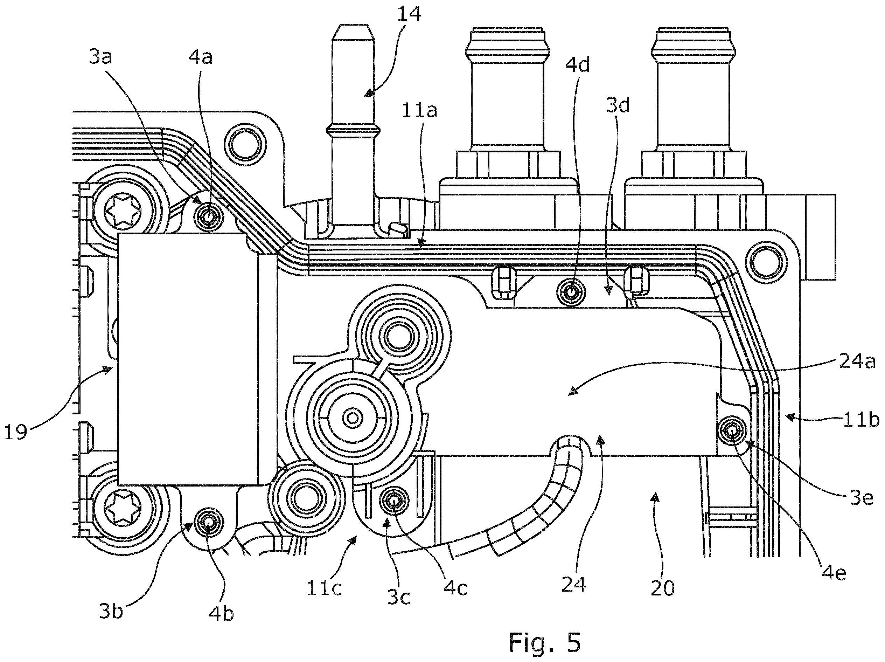

Referring to Figure 5, beneath the top cover 12 of the housing 1 is a rigid cover 24 that is pre-formed to have a shape which fits over and covers at least some of the pump assembly components located underneath. The rigid cover 24 may cover only a portion of the filter 20 and only a portion of the pump 19. Thermal insulation is most importantly required around areas where residual urea is at risk of freezing. As previously described, these areas are within the pressure chamber 21 and in the area between the pump 19 and the filter 20.

The rigid cover 24 may be pre-formed by moulding and is inflexible. The rigid cover 24 is shaped exactly to the shape of the regions of the pump 19 and the filter 20 that it covers. The rigid cover 24 is shaped to cover only an upper portion of the filter 20 and an upper portion of the pump 19, with lower portions of these components remaining exposed within the housing 1. However, the rigid cover 24 is shaped so that it fully insulates the pressure chamber 21 and the pressure sensor 23, and as it insulates the upper portions of the pump 19 and filter 20, and the passage/pressure chamber between the filter and the pump, it provides adequate thermal insulation for these regions within the housing 1. The rigid cover 24 includes a cover portion 24a and an integrated fixing means to enable an attachment of the rigid cover 24 to the housing 1. The cover portion 24a is pre-shaped to fit over, and follow the contours of, the upper portions of the pump 19 and filter 20.

The rigid cover 24 forms part of a heating system (other features of which are not visible in the figures) that provides heat to the covered portions of the filter 20 and the pump 19. The heating system includes a heated blanket (not visible in the figures) glued to the rigid cover 24. In one embodiment, the heated blanket is glued to an inside surface (not visible in the figures) of the cover portion 24a. In other embodiments, the heated blanket may be attached by means of screws, clips, bolts or another mechanical fixing means.

When the cover portion 24a is attached to the housing 1, the heated blanket is located between the inside surface of the cover portion 24a and the pump 19 and filter 20 i.e. beneath the rigid cover 24. In this way, during the attachment process, the inside surface compresses the heated blanket to fit over, and follow the contours of, the upper portions of the pump 19 and filter 20, whilst the rigid cover 24 retains its shape. The heated blanket includes an array of integrated heating filaments (not visible in the figures) located inside the heated blanket. The filaments are electrically powered and connected to the auxiliary electrical power supply of the vehicle (e.g. the car's battery) by at least one wire connection through the electrical interface 15. The filaments are controlled to turn on or turn off by the DCU regardless of whether the vehicle`s internal combustion engine is operating. When the filaments are turned on they produce heat which elevates the overall temperature of the filter 20, the pump 19, and the pressure chamber 21. Advantageously, the heat provided by the filaments further prevents urea from freezing (e.g. during lower ambient temperatures).

The integrated fixing means ensures that the rigid cover 24 cannot be displaced or moved during its use (e.g. as a result of vehicle motion, etc.). Furthermore, in contrast to a conventional housing lid that would fit over the entire housing 1, the cover portion 24a only covers the portions of the pump 19 and filter 20 where residual urea is at a high risk of freezing. In this way, the rigid cover 24 is smaller and lighter than conventional housing lids, which reduces the overall weight and manufacturing costs of the pump assembly.

The integrated fixing means include a plurality of attachment tabs 3, each of which cooperates with a corresponding attachment feature of the housing 1. In the embodiment shown in Figure 5, the rigid cover 24 is fixed to three different side walls 11 of the housing 1; a first side wall 11a (where the fluid outlet 14 is located), a second side wall 11b (located adjacent to the first side wall 11a), and a third side wall 11c (located opposite the first side wall 11a). The rigid cover 24 is connected to the side walls 11 of the housing 1 by five attachment tabs (referred to as tabs) 3. A first tab 3a and a second tab 3b are positioned at either side of the pump 19 and fixedly attach the rigid cover 24 to the first side wall 11a and to the third side wall 11c respectively. A third tab 3c is positioned between the pump 19 and filter 20 (i.e. next to the pressure sensor 23) and also fixedly attaches the rigid cover 24 to the third side wall 11c. A fourth tab 3d is located on one side of the filter 20 and fixedly attaches the rigid cover 24 to the first side wall 11a. A fifth tab 3e is located on an adjacent side of the filter 20 and fixedly attaches the rigid cover 24 to the second side wall 11b. Depending on the location of the attachment tabs 3 in the housing 1, the tabs 3 are either of part-circular form or of a flat-topped form. As shown in Figure 5, the first tab 3a, the second tab 3b, the third tab 3c, and the fifth tab 3e are all in the part-circular form, whereas the fourth tab 3d is of flat-topped form.

The corresponding attachment features of the housing 1 with which the tabs cooperate are connecting pins 4. Each of the side walls 11 of the housing 1 includes an integrally moulded connecting pin 4, the axis of which extends perpendicular to the horizontal plane of the cover portion 24a.

In order to attach the rigid cover 24 to the housing 1, the cover 24 is positioned over the housing so that the aperture in each tabs receives its respective pin. As shown in Figure 5, five connecting pins 4a, 4b, 4c, 4d, and 4e are positioned to cooperate with the five attachment tabs 3a, 3b, 3c, 3d, and 3e, respectively.

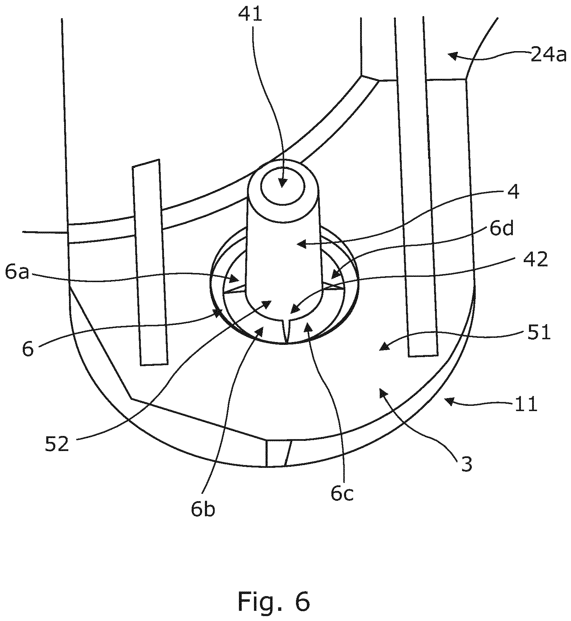

Figure 6 illustrates an enlarged view of one the integrated attachment tabs 3 of the cover portion 24. Each integrated attachment tab 3 includes a rounded buckle portion 51 which is a moulded, and integral, extension of the cover portion 24a. Each attachment tab 3 also includes an aperture 52 centrally located in the buckle portion 51. In order to attach the rigid cover 24 to the side walls 11, the rigid cover 24 is placed on top of the housing 1 and aligned in such a way that each of the connecting pins 4a, 4b, 4c, 4d, and 4e is inserted into an aperture in a corresponding one of the five attachment tabs 3a, 3b, 3c, 3d, and 3e respectively.

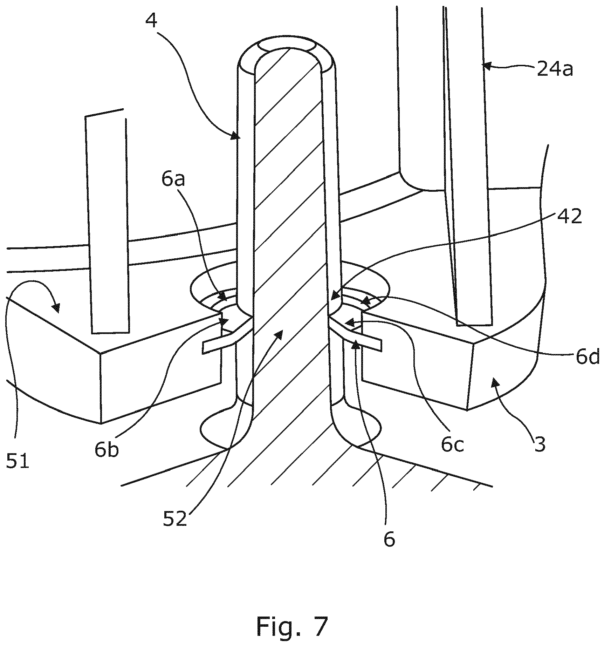

As illustrated in Figures 6 and 7, each individual connecting pin 4 is tapered from a thinner tip 41 at one end, to a thicker central trunk 42. Referring to the enlarged view shown in Figure 7, each of the apertures 52 defines a flexible skirt 6 which provides a means of retaining the connecting pin 4 firmly within the aperture 52 via a gripping force. The flexible skirt 6 is made from rubber, or a similar flexible material. The flexible skirt 6 permits the thinner tip 41 to be inserted into, and fully pass through, the aperture 52 without resistance up to a predetermined point. At the point where the thicker central trunk 42 of the connecting pin 4 engages with the flexible skirt 6 of the aperture 52, the skirt 6 provides a friction resistance to any further insertion of that connecting pin 4 through the aperture 52 beyond the predetermined point. Once a connecting pin 4 is fully inserted into a central aperture 52, the flexible internal skirt 6 imparts a friction grip onto the central trunk 42. This friction grip prevents that connecting pin 4 from becoming loose within the aperture 52, which maintains a fastening connection of the rigid cover 24 to the housing 1.

The flexible skirt 6 of each aperture 52 is segmented into multiple skirt portions which splay as the pin is inserted further through the aperture to accommodate the pin, up until a point. Referring to Figures 6 and 7, each flexible skirt 6 has four skirt portions 6a, 6b, 6c, and 6d that are aligned radially around the central aperture 52 of each buckle portion 51. The four skirt portions 6a, 6b, 6c, and 6d are moveable flaps that allow for limited movement of a connecting pin 4 once it is inserted into the central aperture 52. In this way, the four skirt portions 6a, 6b, 6c, and 6d provide a means to allow a degree of manoeuvrability of each connecting pin 4 during its insertion into its associated aperture 52. This enhances the flexibility of the fastening connection to account for manufacturing tolerances, and makes the process of attaching the rigid cover 24 to the housing 1 easier for a user. In particular, the connecting pins 4 provide a visual indication to the user that the cover 24 has been fitted correctly as each pin 4 projects through the aperture 52 and is visible to the user throughout the attachment process and even when the cover 24 is fully fitted and the attachment process is complete. If all of the pins 4 are visible when the cover is in place, and can be seen to pass through their respective attachment tab 3, the user knows the cover 24 is fitted correctly. This is not the case where a housing cover is required to be fitted over the housing, fully enclosing and shielding from view all components of the pump assembly and any thermally insulating means (e.g. a blanket).

It will be appreciated that the fixing means may be configured in the opposite configuration so that the pins are features of the cover and the apertures for receiving the pins are features of the housing. In other embodiments to that shown in the figures, the attachment features on the housing are connecting bolt-screws or clips, rather than pins, with corresponding features being provided on the cover

Once the rigid cover 24 is in place, as a final step in the assembly the additional top cover 12 is fitted over the housing 1 to cover the components of the pump assembly (including the filter 20, the pump 19 and the rigid cover 24) within an enclosed space, so that the assembly assumes the view shown in Figure 1.

It should be understood that the terms 'upper', 'lower', 'top' and 'bottom' are used for convenience, and refer to the orientation of the pump assembly and its components as illustrated in the drawings. However, these terms are not intended to limit the scope of the invention or imply any limitations on the actual orientation of the pump assembly and its components in use.

### LIST OF REFERENCES

- **1**: housing
- **11**: side wall
- **11a**: first side wall
- **11b**: second side wall
- **11c**: third side wall
- **12**: top cover
- **13**: housing base
- **14**: fluid outlet
- **15**: electrical interface
- **16**: fluid interface connection
- **17**: suction inlet
- **18**: backflow outlet
- **19**: pump
- **191**: pump inlet
- **192**: pump outlet
- **20**: filter
- **21**: pressure chamber
- **22**: check valve
- **23**: pressure sensor
- **24**: rigid cover
- **24a**: cover portion
- **3**: attachment tab
- **3a**: first tab
- **3b**: second tab
- **3c**: third tab
- **3d**: fourth tab
- **3e**: fifth tab
- **4**: connecting pin
- **4a**: first connecting pin
- **4b**: second connecting pin
- **4c**: third connecting pin
- **4d**: fourth connecting pin
- **4e**: fifth connecting pin
- **41**: tip
- **42**: central trunk
- **51**: buckle portion
- **52**: central aperture
- **6**: internal skirt
- **6a**: skirt portion
- **6b**: skirt portion
- **6c**: skirt portion
- **6d**: skirt portion
- **A**: longitudinal axis of pump
- **B**: longitudinal axis of filter
- **H**: vertical axis

## Claims

1. A pump assembly for use in a selective catalytic reduction (SCR) system of a compression ignition internal combustion engine, the pump assembly comprising:
a housing (1);
a pump (19), located within the housing (1), for pressurising urea to be delivered by the selective catalytic reduction (SCR) system;
a filter (20), located within the housing (1), for filtering urea to be drawn by the pump (19) prior to pressurisation; and
a heating system including a rigid cover (24) for both the pump (19) and the filter (20) and a heated blanket beneath the rigid cover (24) which covers the pump (19) and the filter (20),
the rigid cover (24) being provided with integrated fixing means to enable attachment of the rigid cover (24) to the housing (1), **characterized in that** the heated blanket is attached to the rigid cover (20) by means of glue or a mechanical fixing means.

2. The pump assembly as claimed in claim 1; wherein a longitudinal axis of the pump (19) is arranged perpendicularly, or near perpendicularly, relative to a longitudinal axis of the filter (20).

3. The pump assembly as claimed in claim 1 or claim 2, wherein the rigid cover (24) is configured to cover only a portion of the filter (20) and only a portion of the pump (19).

4. The pump assembly as claimed in claim 3, wherein the rigid cover (24) comprises a cover portion (24a) shaped to fit over an upper portion of the pump (19) and an upper portion of the filter (20).

5. The pump assembly as claimed in any preceding claim, wherein the integrated fixing means includes a plurality of attachment tabs (3), each of which cooperates with a corresponding attachment feature of the pump housing (1).

6. The pump assembly as claimed in claim 5, wherein at least one of the corresponding attachment features takes the form of a connecting pin (4).

7. The pump assembly as claimed in claim 6, wherein the attachment tab (3) includes a buckle portion (51) which is a moulded extension of the cover portion (24a).

8. The pump assembly as claimed in claim 7, wherein the buckle portion (51) comprises an aperture (52) for receiving a respective one of the connecting pins (4) for connecting the rigid cover (24) to the housing (1).

9. The pump assembly as claimed in any of claims 6 to 8, wherein the connecting pin (4) is tapered from a thinner tip (41) at one end thereof to a thicker central trunk (42) at the other end thereof.

10. The pump assembly as claimed in any preceding claim, wherein the housing comprises a top cover (12) which encloses the housing (10) so that the rigid housing (24), the pump (19) and the filter (20) are contained within an enclosed space defined within the housing (1).

11. The pump assembly as claimed in any preceding claim; wherein the housing (1) further comprises at least four side walls (11) and a housing base (13); wherein the housing base (13) includes a suction inlet (17) for urea, a backflow outlet (18) for urea, and a fluid interface (16).

12. A selective catalytic reduction (SCR) system of a compression ignition internal combustion engine including a pump assembly as claimed in any preceding claim, and a dosing module for receiving pressurised urea from the pump assembly and dosing to the exhaust flow from the engine.

13. A method of assembling a pump assembly for use in a selective catalytic reduction (SCR) system of a compression ignition internal combustion engine, the method comprising:
locating a pump (19) within a housing (1); the pump being configured to pressurise urea to be delivered by the selective catalytic reduction (SCR) system;
locating a filter (20) within a housing (1), the filter being configured to filter urea to be drawn by the pump (19) prior to pressurisation; and
providing a heating system including a rigid cover (24), having an integrated fixing means, for both the pump (19) and the filter (20), and a heated blanket beneath the rigid cover (24) which covers the pump (19) and the filter (20), the heated blanket being attached to the rigid cover by means of glue or a mechanical fixing means; and wherein the method further comprises the step of
cooperating the integrated fixing means with a corresponding attachment feature (52) provided on the housing (1) to attach the rigid cover (24) to the housing (1), and performing a visual inspection of the integrated fixing means throughout the attachment step so as to position the rigid cover (24) correctly on the housing (1).

14. The method as claimed in claim 13, comprising the further step of closing the housing (1) with an additional cover (12) so that the pump (19) and the filter (20) are contained within an enclosed space, defined within the housing (1), together with the rigid cover (24).

## Patentansprüche

1. Pumpenanordnung zur Verwendung in einem System der selektiven katalytischen Reduktion (SCR-System) eines Verbrennungsmotors mit Kompressionszündung, wobei die Pumpenanordnung Folgendes umfasst:
ein Gehäuse (1);
eine Pumpe (19), die sich innerhalb des Gehäuses (1) befindet, um Harnstoff, der durch das System der selektiven katalytischen Reduktion (SCR-System) abgegeben werden soll, unter Druck zu setzen;
einen Filter (20), der sich innerhalb des Gehäuses (1) befindet, um Harnstoff zu filtern, der vor dem Unter-Druck-Setzen von der Pumpe (19) angesaugt werden soll; und
ein Heizsystem, das eine starre Abdeckung (24) sowohl für die Pumpe (19) als auch für den Filter (20) und eine beheizte Plane unter der starren Abdeckung (24), die die Pumpe (19) und den Filter (20) bedeckt, einschließt,
wobei die starre Abdeckung (24) mit integrierten Fixiermitteln versehen ist, um eine Befestigung der starren Abdeckung (24) an dem Gehäuse (1) zu ermöglichen,
**dadurch gekennzeichnet, dass** die beheizte Plane mittels Klebstoff oder einem mechanischen Fixiermittel an der starren Abdeckung (20) befestigt ist.

2. Pumpenanordnung nach Anspruch 1; wobei eine Längsachse der Pumpe (19) senkrecht oder annähernd senkrecht zu einer Längsachse des Filters (20) angeordnet ist.

3. Pumpenanordnung nach Anspruch 1 oder 2, wobei die starre Abdeckung (24) konfiguriert ist, um nur einen Abschnitt des Filters (20) und nur einen Abschnitt der Pumpe (19) abzudecken.

4. Pumpenanordnung nach Anspruch 3, wobei die starre Abdeckung (24) einen Abdeckabschnitt (24a) umfasst, der so geformt ist, dass er über einen oberen Abschnitt der Pumpe (19) und einen oberen Abschnitt des Filters (20) passt.

5. Pumpenanordnung nach einem der vorstehenden Ansprüche, wobei die integrierten Fixiermittel eine Vielzahl von Befestigungslaschen (3) einschließen, von denen jede mit einem entsprechenden Befestigungsmerkmal des Pumpengehäuses (1) zusammenwirkt.

6. Pumpenanordnung nach Anspruch 5, wobei mindestens eines der entsprechenden Befestigungsmerkmale die Form eines Verbindungsstifts (4) aufweist.

7. Pumpenanordnung nach Anspruch 6, wobei die Befestigungslasche (3) einen Schnallenabschnitt (51) einschließt, der eine geformte Verlängerung des Abdeckungsabschnitts (24a) ist.

8. Pumpenanordnung nach Anspruch 7, wobei der Schnallenabschnitt (51) eine Öffnung (52) zum Aufnehmen eines jeweiligen der Verbindungsstifte (4) zum Verbinden der starren Abdeckung (24) mit dem Gehäuse (1) umfasst.

9. Pumpenanordnung nach einem der Ansprüche 6 bis 8, wobei der Verbindungsstift (4) von einer dünneren Spitze (41) an einem Ende davon zu einem dickeren mittleren Rumpf (42) an seinem anderen Ende konisch verläuft.

10. Pumpenanordnung nach einem der vorstehenden Ansprüche, wobei das Gehäuse eine obere Abdeckung (12) umfasst, die das Gehäuse (10) umschließt, sodass das starre Gehäuse (24), die Pumpe (19) und der Filter (20) in einem umschlossenen Raum enthalten sind, der innerhalb des Gehäuses (1) definiert ist.

11. Pumpenanordnung nach einem der vorstehenden Ansprüche; wobei das Gehäuse (1) ferner mindestens vier Seitenwände (11) und einen Gehäuseboden (13) umfasst; wobei der Gehäuseboden (13) einen Saugeinlass (17) für Harnstoff, einen Rückströmauslass (18) für Harnstoff und eine Fluidschnittstelle (16) einschließt.

12. System der selektiven katalytischen Reduktion (SCR-System) eines Verbrennungsmotors mit Kompressionszündung, das eine Pumpenanordnung nach einem der vorstehenden Ansprüche und ein Dosiermodul zum Aufnehmen von unter Druck stehendem Harnstoff aus der Pumpenanordnung und Dosieren zum Abgasstrom aus dem Motor einschließt.

13. Verfahren zum Zusammenbauen einer Pumpenanordnung zur Verwendung in einem System der selektiven katalytischen Reduktion (SCR-System) eines Verbrennungsmotors mit Kompressionszündung, wobei das Verfahren Folgendes umfasst:
Anordnen einer Pumpe (19) innerhalb eines Gehäuses (1); wobei die Pumpe konfiguriert ist, um Harnstoff, der durch das System der selektiven katalytischen Reduktion (SCR-System) abgegeben werden soll, unter Druck zu setzen;
Anordnen eines Filters (20) innerhalb eines Gehäuses (1), wobei der Filter konfiguriert ist, um Harnstoff zu filtern, der vor dem Unter-Druck-Setzen von der Pumpe (19) angesaugt werden soll; und
Bereitstellen eines Heizsystems, das eine starre Abdeckung (24), die ein integriertes Fixiermittel für sowohl die Pumpe (19) als auch den Filter (20) aufweist, und eine beheizte Plane unterhalb der starren Abdeckung (24), die die Pumpe (19) und den Filter (20) abdeckt, einschließt, wobei die beheizte Plane an der starren Abdeckung mittels Klebstoff oder einem mechanischen Fixiermittel befestigt ist; und wobei das Verfahren ferner den Schritt des
Zusammenwirkens des integrierten Fixiermittels mit einem entsprechenden Befestigungsmerkmal (52), das an dem Gehäuse (1) bereitgestellt ist, um die starre Abdeckung (24) an dem Gehäuse (1) zu befestigen, und Durchführen einer visuellen Inspektion des integrierten Fixiermittels während des gesamten Befestigungsschritts umfasst, um die starre Abdeckung (24) korrekt auf dem Gehäuse (1) zu positionieren.

14. Verfahren nach Anspruch 13, umfassend den weiteren Schritt des Schließens des Gehäuses (1) mit einer zusätzlichen Abdeckung (12), sodass die Pumpe (19) und der Filter (20) zusammen mit der starren Abdeckung (24) in einem umschlossenen Raum enthalten sind, der innerhalb des Gehäuses (1) definiert ist.

## Revendications

1. Ensemble pompe pour utilisation dans un système de réduction catalytique sélective (SCR) d'un moteur à combustion interne à allumage par compression, l'ensemble pompe comprenant :
un logement (1) ;
une pompe (19), localisée au sein du logement (1), destinée à mettre sous pression de l'urée qui sera délivrée par le système de réduction catalytique sélective (SCR) ;
un filtre (20), localisé au sein du logement (1), destiné à filtrer de l'urée à aspirer par la pompe (19) avant mise sous pression ; et
un système de chauffage comportant un couvercle rigide (24) à la fois pour la pompe (19) et pour le filtre (20) et une couverture chauffante en dessous du couvercle rigide (24) qui couvre la pompe (19) et le filtre (20),
le couvercle rigide (24) étant pourvu d'un moyen de fixation intégré pour permettre l'attachement du couvercle rigide (24) au logement (1),
**caractérisé en ce que** la couverture chauffante est attachée au couvercle rigide (20) au moyen de colle ou d'un moyen de fixation mécanique.

2. Ensemble pompe selon la revendication 1 ; dans lequel un axe longitudinal de la pompe (19) est agencé perpendiculairement, ou presque perpendiculairement, par rapport à un axe longitudinal du filtre (20).

3. Ensemble pompe selon la revendication 1 ou la revendication 2, dans lequel le couvercle rigide (24) est conçu pour couvrir uniquement une partie du filtre (20) et uniquement une partie de la pompe (19).

4. Ensemble pompe selon la revendication 3, dans lequel le couvercle rigide (24) comprend une partie de couvercle (24a) profilée pour s'ajuster par-dessus une partie supérieure de la pompe (19) et une partie supérieure du filtre (20).

5. Ensemble pompe selon l'une quelconque revendication précédente, dans lequel le moyen de fixation intégré comporte une pluralité de languettes d'attachement (3), dont chacune coopère avec un élément d'attachement correspondant du logement de pompe (1).

6. Ensemble pompe selon la revendication 5, dans lequel au moins l'un des éléments d'attachement correspondants prend la forme d'une tige de liaison (4).

7. Ensemble pompe selon la revendication 6, dans lequel la languette d'attachement (3) comporte une partie boucle (51) qui est une extension moulée de la partie de couvercle (24a).

8. Ensemble pompe selon la revendication 7, dans lequel la partie boucle (51) comprend une ouverture (52) destinée à recevoir une respective parmi les tiges de liaison (4) pour relier le couvercle rigide (24) au logement (1).

9. Ensemble pompe selon l'une quelconque des revendications 6 à 8, dans lequel la tige de liaison (4) est effilée d'une pointe plus mince (41) au niveau d'une extrémité de celle-ci jusqu'à un tronc central plus épais (42) au niveau de l'autre extrémité de celle-ci.

10. Ensemble pompe selon l'une quelconque revendication précédente, dans lequel le logement comprend un couvercle supérieur (12) qui enferme le logement (10) de sorte que le logement rigide (24), la pompe (19) et le filtre (20) sont contenus au sein d'un espace fermé défini au sein du logement (1).

11. Ensemble pompe selon l'une quelconque revendication précédente ; dans lequel le logement (1) comprend en outre au moins quatre parois latérales (11) et une base de logement (13) ; la base de logement (13) comportant une entrée d'aspiration (17) pour de l'urée, une sortie de refoulement (18) pour de l'urée, et une interface de fluide (16).

12. Système de réduction catalytique sélective (SCR) d'un moteur à combustion interne à allumage par compression comportant un ensemble pompe selon l'une quelconque revendication précédente, et un module de dosage destiné à recevoir de l'urée sous pression à partir de l'ensemble pompe et à la doser vers le flux d'échappement provenant du moteur.

13. Procédé d'assemblage d'un ensemble pompe pour utilisation dans un système de réduction catalytique sélective (SCR) d'un moteur à combustion interne à allumage par compression, le procédé comprenant :
la localisation d'une pompe (19) au sein d'un logement (1) ; la pompe étant conçue pour mettre sous pression de l'urée à délivrer par le système de réduction catalytique sélective (SCR) ;
la localisation d'un filtre (20) au sein d'un logement (1), le filtre étant conçu pour filtrer de l'urée à aspirer par la pompe (19) avant mise sous pression ; et
la fourniture d'un système de chauffage comportant un couvercle rigide (24), ayant un moyen de fixation intégré, à la fois pour la pompe (19) et pour le filtre (20), et une couverture chauffante en dessous du couvercle rigide (24) qui couvre la pompe (19) et le filtre (20), la couverture chauffante étant attachée au couvercle rigide au moyen de colle ou d'un moyen de fixation mécanique ; et le procédé comprenant en outre l'étape consistant à
faire coopérer le moyen de fixation intégré avec un élément d'attachement correspondant (52) fourni sur le logement (1) pour attacher le couvercle rigide (24) au logement (1), et mettre en oeuvre une inspection visuelle du moyen de fixation intégré tout au long de l'étape d'attachement de façon à positionner le couvercle rigide (24) correctement sur le logement (1).

14. Procédé selon la revendication 13, comprenant l'étape supplémentaire consistant à fermer le logement (1) avec un couvercle supplémentaire (12) de sorte que la pompe (19) et le filtre (20) sont contenus au sein d'un espace fermé, défini au sein du logement (1), conjointement avec le couvercle rigide (24).
